# EUROPÄISCHE PATENTANMELDUNG

(11) **EP 3 771 623 A2**
(43) Veröffentlichungstag der Anmeldung: **03.02.2021**
(21) Anmeldenummer: 20187561.4
(22) Anmeldetag: 24.07.2020
(51) Int. Cl.: B62J 1/08, B62K 19/36

(54) **VERFAHREN UND SYSTEM ZUM REGELN EINER HÖHE EINER UNBELASTETVERSTELLBAREN SATTELSTÜTZE EINES ZWEIRADES**

(30) Priorität: 02.08.2019 DE 102019211615
(71) Anmelder: Robert Bosch GmbH, 70442 Stuttgart (DE)
(72) Erfinder: Dackermann, Tim, 72074 Tuebingen (DE); Kohlrausch, Philipp, 70180 Stuttgart (DE); Brockmann, Markus, 72116 Moessingen (DE); Moia, Alessandro, 71088 Holzgerlingen (DE)

(57) **Zusammenfassung**

Die Erfindung betrifft ein Verfahren zum Regeln einer Höhe einer unbelastet verstellbaren Sattelstütze eines Zweirads, umfassend die Schritte
- Ermitteln von zumindest einem Wert zumindest einer Messgröße, die zumindest eine n-te Ableitung einer Wegfunktion des Zweirads wiedergibt, wobei n eine natürliche Zahl ist,
- Ermitteln eines Antriebsmoments des Zweirads, insbesondere eines Pedalmoments des Zweirads, und/oder Ermitteln einer Belastung der Sattelstütze,
- Absenken der Sattelstütze von einer vorgebbaren Tritthöhe, insbesondere auf eine vorgebbare Anhaltehöhe, wenn ein erster Schwellwert von Wertender zumindest einen Messgröße überschritten wird und ein zweiter Schwellwert von Werten des Antriebsmoments unterschritten wird und/oder die Belastung der Sattelstütze einen ersten vorgebbaren Wert überschreitet, und/oder
- Anheben der Sattelstütze von der vorgebbaren Anhaltehöhe, insbesondere auf die vorgebbare Tritthöhe, wenn ein dritter Schwellwert von Werten der zumindest einen Messgröße überschritten wird und Werte des Antriebsmoments einen vierten Schwellwert überschreiten und/oder die Belastung der Sattelstütze einen zweiten vorgebbaren Wert unterschreitet.

## Beschreibung

### Technisches Gebiet

Die Erfindung betrifft ein Verfahren zum Regeln einer Höhe einer unbelastet verstellbaren Sattelstütze eines Zweirades.

Die Erfindung betrifft weiter ein System zum Regeln einer Höhe einer unbelastet verstellbaren Sattelstütze eines Zweirades.

Die Erfindung betrifft weiter eine Höhenverstelleinrichtung zum unbelasteten Verstellen einer Sattelstütze eines Zweirades.

### Stand der Technik

Unsichere oder ungeübte Zweiradfahrer haben oft Schwierigkeiten oder Probleme beim Losfahren und beim Anhalten, beispielsweise an einer Ampel, was eine Unfallgefahr erhöht. Viele Zweiradfahrer stellen deshalb während der gesamten Fahrt ihre Sattelstütze niedrig ein, um ihre Füße beim Stillstand des Zweirads komfortabel auf den Boden stellen zu können. Das führt allerdings zu einer unergonomischen Tritthöhe während der Fahrt.

Aus der DE 10 2010 035 674 A1 oder der DE 20 2011 102 651 U1 ist jeweils eine aktive, also belastet verstellbare Sattelstütze bekannt geworden, die die Sattelstütze automatisch bei Anhaltevorgängen absenkt und automatisch bei Anfahrvorgängen wieder anhebt. Die aktiven verstellbaren Sattelstützen erfordern eine hohe Leistungsaufnahme, weisen ein hohes Gewicht auf und sind teuer und aufwendig in der Konstruktion.

Weiterhin sind passiv beziehungsweise unbelastet verstellbare Sattelstützen bekannt geworden, die dem Fahrer durch das Betätigen eines Knopfs oder eines Hebels ermöglichen, die Position des Sattels mit dem eigenen Körpergewicht zu verstellen. Hierbei muss der Fahrer das eigene Gewicht auf die Pedale stützen, um ein zu schnelles Absenken des Sattels und damit eine plötzliche Einwirkung auf seine Wirbelsäule zu vermeiden, wenn die Sattelstütze ihren untersten Anschlag erreicht.

### Offenbarung der Erfindung

In einer Ausführungsform stellt die vorliegende Erfindung ein Verfahren zum Regeln einer Höhe einer unbelastet verstellbaren Sattelstütze eines Zweirads, bereit, umfassend die Schritte
- Ermitteln von zumindest einem Wert zumindest einer Messgröße, die zumindest eine n-te Ableitung einer Wegfunktion des Zweirads wiedergibt, wobei n eine natürliche Zahl ist,
- Ermitteln eines Antriebsmoments des Zweirads, insbesondere eines Pedalmoments des Zweirads, und/oder Ermitteln einer Belastung der Sattelstütze,
- Absenken der Sattelstütze von einer vorgebbaren Tritthöhe, insbesondere auf eine vorgebbare Anhaltehöhe, wenn ein erster Schwellwert von Werten der zumindest einen Messgröße überschritten wird und ein zweiter Schwellwert von Werten des Antriebsmoments unterschritten wird und/oder die Belastung der Sattelstütze einen ersten vorgebbaren Wert überschreitet, und/oder
- Anheben der Sattelstütze von der vorgebbaren Anhaltehöhe, insbesondere auf die vorgebbare Tritthöhe, wenn ein dritter Schwellwert von Werten der zumindest einen Messgröße überschritten wird und Werte des Antriebsmoments einen vierten Schwellwert überschreiten und/oder die Belastung der Sattelstütze einen zweiten vorgebbaren Wert unterschreitet.

In einer weiteren Ausführungsform stellt die vorliegende Erfindung ein System zum Regeln einer Höhe einer unbelastet verstellbaren Sattelstütze eines Zweirads bereit, umfassend einen ersten Sensor zum Ermitteln von zumindest einem Wert zumindest einer Messgröße, die zumindest eine n-te Ableitung einer Wegfunktion des Zweirads wiedergibt, wobei n eine natürliche Zahl ist, einen zweiten Sensor zum Ermitteln eines Antriebsmoments des Zweirads, insbesondere eines Pedalmoments des Zweirads, und/oder einen dritten Sensor zum Ermitteln einer Belastung der Sattelstütze, und eine Höhensteuerungseinrichtung, die mit den Sensoren zum Empfang von jeweiligen Messwerten der Sensoren verbunden ist und die ausgebildet ist, eine Höhenverstelleinrichtung für die Sattelstütze derart zu betätigen, dass
ein Absenken der Sattelstütze von einer vorgebbaren Tritthöhe, insbesondere auf eine vorgebbare Anhaltehöhe, vorgenommen wird, wenn ein erster Schwellwert von Werten der zumindest einen Messgröße überschritten wird und ein zweiter Schwellwert von Werten des Antriebsmoments unterschritten wird und/oder die Belastung der Sattelstütze einen ersten vorgebbaren Wert überschreitet, und/oder
ein Anheben der Sattelstütze von einer vorgebbaren Anhaltehöhe, insbesondere auf die vorgebbare Tritthöhe, vorgenommen wird, wenn ein dritter Schwellwert von Werten der zumindest einen Messgröße überschritten wird und Werte des Antriebsmoments einen vierten Schwellwert überschreiten und/oder die Belastung der Sattelstütze einen zweiten vorgebbaren Wert unterschreitet.
Erster und dritter und/oder zweiter und vierter Schwellwert und/oder erster und zweiter vorgebbarer Wert können hierbei jeweils gleich sein.

In einer weiteren Ausführungsform stellt die vorliegende Erfindung eine Höhenverstelleinrichtung zum unbelasteten Verstellen einer Sattelstütze eines Zweirads bereit, umfassend eine Fluidregeleinheit, zumindest eine erste Kammer und zumindest eine zweite Kammer, die fluidisch miteinander verbunden sind, und wobei mittels der Fluidregeleinheit der Fluss eines Fluids zwischen erster und zweiter Kammer regelbar ist, und wobei ein Element der Sattelstütze mit einer der Kammern verbindbar ist, sodass mittels der Sattelstütze ein Druck auf das Fluid in der einen Kammer ausübbar ist, und wobei eine Drosseleinrichtung angeordnet ist, die bei geöffneter Fluidregeleinheit den Fluss des Fluids verlangsamt.

Die Fluidregeleinheit kann beispielsweise als Ventileinheit ausgeführt sein, umfassend zumindest ein Ventil umfassen, welches in einem geöffneten Zustand einen Durchfluss ermöglicht, in einem geschlossenen Zustand den Durchfluss unterbricht und in einem teilweise geöffneten, teilweise geschlossenen Zustand einen teilweisen Durchfluss des Fluids ermöglicht.

Der Begriff "aktiv" in Bezug auf eine Sattelstütze ist insbesondere in Ansprüchen, vorzugsweise in der Beschreibung dahingehend zu verstehen, dass ein Anheben der Sattelstütze auch gegen das Gewicht des Fahrers möglich ist. Dementsprechend ist der Begriff "passiv" in Bezug auf eine Sattelstütze vorzugsweise in den Ansprüchen, insbesondere in der Beschreibung dahingehend zu verstehen, dass ein Anheben der Sattelstütze nicht gegen das Gewicht des Fahrers möglich ist.

Einer der damit erzielten Vorteile ist, dass ein automatisiertes Regeln der Höhe der Sattelstütze und damit des Sattels möglich ist, sodass der Sattel automatisch bei Anhaltevorgängen abgesenkt und/oder bei Anfahrvorgängen wieder angehoben werden kann. Ein weiterer Vorteil sind die geringen Kosten, die niedrige Leistungsaufnahme einer entsprechenden Höhenverstelleinrichtung, das geringe zusätzliche Gewicht und die einfache Implementierung. Ein weiterer Vorteil ist, dass der Komfort für einen Fahrer wesentlich erhöht wird.

Bei bekannten manuell verstellbaren Sattelstützen wird beispielsweise ein Knopf für die Verstellung durch einen Nutzer betätigt. Dieser kann vor dem Betätigen des Knopfs den Sattel und damit die Sattelstütze entlasten und einen Aufprall am unteren Anschlag vermeiden. Bei der automatisch verstellbaren Sattelstütze gemäß Ausführungsformen der vorliegenden Erfindung kann der Sattel abgesenkt werden, ohne dass eine explizite Fahreraktion erforderlich ist. In der Folge kann der Fahrer regelmäßig nicht rechtzeitig den Sattel entlasten. Um den Aufprall am unteren Anschlag zu vermeiden, wird die Absenkgeschwindigkeit der Sattelstütze geregelt und es wird somit Energie aufgenommen. Das kann beispielsweise ein entsprechendes Regelventil in der Höhenverstelleinrichtung überlasten und eventuell beschädigen. Um dies zu vermeiden, ist die Drosseleinrichtung angeordnet, die ausgebildet ist, die Energie aufzunehmen und ein Beschädigen der Höhenverstelleinrichtung, beispielsweise des Regelventils zu vermeiden.

Weitere Merkmale, Vorteile und weitere Ausführungsformen der Erfindung sind im Folgenden beschrieben oder werden dadurch offenbar.

Gemäß einer vorteilhaften Weiterbildung werden Werte zumindest zweier unterschiedlicher Messgrößen ermittelt, die unterschiedliche Ordnungen der Ableitung der Wegfunktion wiedergeben. Vorteil hiervon ist, dass damit mehrere Messgrößen zur Verfügung stehen, um eine automatisierte Regelung für die Höhe der Sattelstütze bereitzustellen.

Gemäß einer weiteren vorteilhaften Weiterbildung gibt eine der Messgrößen eine Beschleunigung und die andere Messgröße eine Geschwindigkeit des Zweirads wieder. Vorteil hiervon ist, dass die Genauigkeit beim Erkennen eines Anfahrvorgangs oder eines Abbremsvorgangs erhöht wird.

Gemäß einer weiteren vorteilhaften Weiterbildung wird ein Schwellwert für die zweite Messgröße anhand zumindest eines Werts der ersten Messgröße bestimmt. Damit kann beispielsweise eine Geschwindigkeitsschwelle anhand der Beschleunigung beziehungsweise Verzögerung bestimmt werden. Höhere Verzögerungen bedeuten eine höhere Geschwindigkeitsschwelle, wobei niedrigere Verzögerungen eine niedrigere Geschwindigkeitsschwelle bedeuten. Damit wird berücksichtigt, dass hohe Verzögerungen einer hohen Wahrscheinlichkeit entsprechen, dass der Fahrer eines Zweirads anhalten möchte, wohingegen niedrigere Verzögerungen einer niedrigeren Wahrscheinlichkeit entsprechen, dass der Fahrer anhalten möchte, beispielsweise möchte dieser das Fahrrad ausrollen lassen.

Gemäß einer weiteren vorteilhaften Weiterbildung wird anhand eines Zwischenwerts der Schwellwert für die zweite Messgröße errechnet, der einem Schwellwert für die Geschwindigkeit des Verringerns von Werten der ersten Messgröße korrigiert auf Basis von Werten des Antriebsmoments (101) entspricht. Insbesondere wird hierzu ein Schwellwert für die Geschwindigkeit mit einem Faktor abhängig von dem Pedalmoment angepasst. Damit kann vermieden werden, dass die Sattelstütze abgesenkt wird, während der Fahrer mittels der Pedaleinheit pedaliert.

Gemäß einer weiteren vorteilhaften Weiterbildung wird bei einem Absenken der Sattelstütze die Geschwindigkeit des Absinkens der Sattelstütze gemessen und auf und/oder unter einen vorgebbaren Wert geregelt. Vorteil hiervon ist, dass ein langsames und kontrolliertes Verringern der Höhe der Sattelstütze ermöglicht wird, was einen höheren Fahrkomfort für den Fahrer des Zweirads bedeutet.

Gemäß einer weiteren vorteilhaften Weiterbildung der Höhenverstelleinrichtung ist die Drosseleinrichtung in Form eines Hohlzylinders zum Durchfluss des Fluids ausgebildet, wobei der Innendurchmesser des Hohlzylinders über seine Längserstreckung variiert, insbesondere regelmäßig ausgebildet ist und insbesondere wobei mittig ein oder mehrere Flusshemmelemente angeordnet sind. Vorteil hiervon ist, dass damit auf einfache Weise eine Drosseleinrichtung zur Verfügung gestellt wird, die wirksam den Durchfluss eines Fluids hemmt, sodass die Belastung auf die Ventileinheit beim Öffnen und/oder Schließen des Ventils der Ventileinheit begrenzt bleibt beziehungsweise vermindert wird.

Gemäß einer weiteren vorteilhaften Weiterbildung der Höhenverstelleinrichtung ist die Drosseleinrichtung in Richtung des Flusses des Fluids beim Absenken der Sattelstütze vor der Fluidregeleinheit angeordnet. Damit werden auf einfache Weise hohe Belastungen der Fluidregeleinheit durch das Fluid beim Absenken der Sattelstütze vermieden.

Gemäß einer weiteren vorteilhaften Weiterbildung der Höhenverstelleinrichtung weist die Drosseleinrichtung an ihrem Ausgang in Flussrichtung des Fluids beim Absenken der Sattelstütze ein Rückschlagventil auf. Mittels eines Rückschlagventils wird vermieden, dass die Sattelstütze passiv angehoben wird, wenn der Fahrer nicht auf den Sattel sitzt und die Fluidregeleinheit zum Absenken der Sattelstütze betätigt ist.

Gemäß einer weiteren vorteilhaften Weiterbildung der Höhenverstelleinrichtung sind Drosseleinrichtung, Fluidregeleinheit und die beiden Kammern so zueinander angeordnet, dass die Drosseleinrichtung bei geschlossener Ventileinheit beim Anheben der Sattelstütze fluiddurchflussfrei ist. Damit kann die Sattelstütze beim Vergrößern ihrer Höhenposition ohne Verzögerung durch die Drosseleinrichtung angehoben werden.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigen
- Figur 1: Schritte eines Verfahrens gemäß einer Ausführungsform der vorliegenden Erfindung,
- Figur 2: Schritte eines Verfahrens gemäß einer Ausführungsform der vorliegenden Erfindung,
- Figur 3: Schritte eines Verfahrens gemäß einer Ausführungsform der vorliegenden Erfindung,
- Figur 4: eine Höhenverstelleinrichtung gemäß einer Ausführungsform der vorliegenden Erfindung,
- Figur 5: die Höhenverstelleinrichtung gemäß Figur 4 im Detail,
- Figur 6-8: verschiedene Zustände der Ventileinheit für verschiedene Betriebszustände der Sattelstütze,
- Figur 9: eine Sattelstütze mit einer Höhenverstelleinrichtung gemäß einer Ausführungsform der vorliegenden Erfindung, und
- Figur 10: ein Verfahren zum Regeln einer Höhe der passiv verstellbaren Sattelstütze eines Zweirads gemäß einer Ausführungsform der vorliegenden Erfindung.

### Ausführungsformen der Erfindung

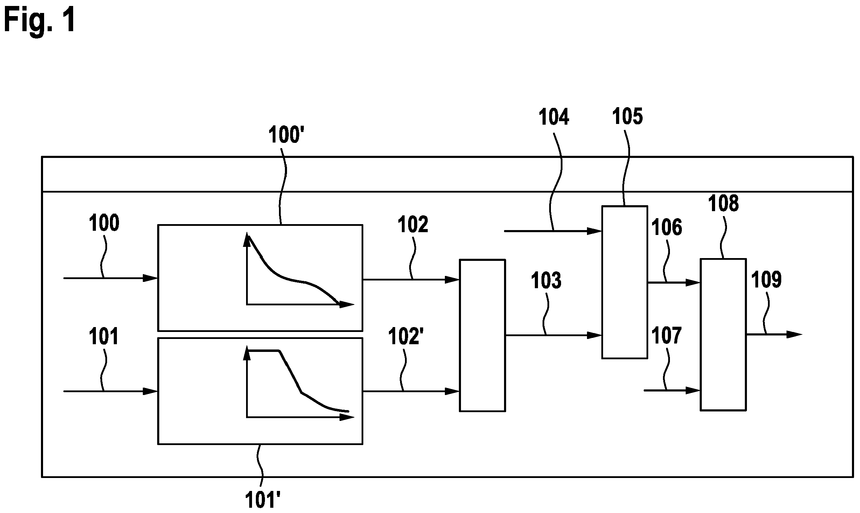

Figur 1 zeigt Schritte eines Verfahrens gemäß einer Ausführungsform der vorliegenden Erfindung.

Im Detail sind in Figur 1 Schritte und Bedingungen zum Absenken einer Sattelstütze eines Zweirads gezeigt. Hierbei erfolgt die Absenkung wie folgt:
In Abhängigkeit einer Verzögerung 100 des Zweirads wird eine Geschwindigkeitsschwelle 102 definiert (Max v raw). Höhere Verzögerungen bedeuten eine höhere Geschwindigkeitsschwelle 102, während eine niedrigere Verzögerung eine niedrigere Geschwindigkeitsschwelle 102 bedeutet. Diese Kennlinie beziehungsweise dieser Zusammenhang 100' berücksichtigt die Tatsache, dass hohe Verzögerungen mit einer hohen Wahrscheinlichkeit dafürsprechen, dass der Fahrer des Zweirads anhalten möchte, wohingegen eine niedrige Verzögerung einer niedrigen Wahrscheinlichkeit entspricht, dass der Fahrer anhalten möchte, beispielsweise möchte der Fahrer das Fahrrad ausrollen lassen.

Die Geschwindigkeitsschwelle 102 wird mit einem Faktor 102' abhängig von dem Pedalmoment 101 angepasst. Diese zweite Kennlinie 101', die den Faktor in Abhängigkeit des Pedalmoments 101 wiedergibt, vermeidet, dass die Sattelstütze abgesenkt wird, wenn der Fahrer pedaliert.

Die daraus resultierende Geschwindigkeitsschwelle 103 wird mit der aktuellen Geschwindigkeit 104 des Zweirads verglichen (Vergleich Bezugszeichen 105): Wenn die aktuelle Geschwindigkeit 105 niedriger als die Geschwindigkeitsschwelle 103 ist und gleichzeitig (Bezugszeichen 108) der Fahrer auf dem Sattel sitzt (Bezugszeichen 107 - Fahrererkennung positiv), dann wird die Sattelstütze automatisch abgesenkt (Bezugszeichen 109), um ein komfortables Abstellen der Füße auf dem Boden zu ermöglichen.

Wenn der Sattel die optimale Anhaltehöhe 31 erreicht hat, dann wird die Höhe der Sattelstütze festgehalten beziehungsweise arretiert.

Korrespondierend zu den oben beschriebenen Absenkschritten erfolgt ein Anheben der Sattelstütze, wenn ein Losfahrvorgang erkannt wird. Dies erfolgt durch das Überschreiten von entsprechenden Werten für das Pedalmoment 101, für die aktuelle Geschwindigkeit 104 und für die Beschleunigung 100. Die Sattelstütze wird angehoben, wenn erkannt wird, dass der Fahrer den Sattel entlastet hat. Dies vermeidet ein unerwünschtes Absenken des Sattels. Wenn die Sattelstütze die vom Fahrer eingestellte Tritthöhe 30 erreicht hat, wird die Sattelstütze in ihrer Höhe wieder festgelegt beziehungsweise arretiert.

Ist sichergestellt, dass die Sattelstütze immer nur zwischen dem untersten und obersten Anschlag, also zwischen Tritt- und Anhaltehöhe 30 beziehungsweise 31 verfahren wird, wobei der Fahrer den obersten Anschlag als optimale Tritthöhe 30 manuell einstellen muss, dann können die beschriebenen Schritte beziehungsweise das diesen Schritten zugrundeliegende Logikprinzip auch ohne eine Fahrererkennung 107 durchgeführt werden. Das hat den Vorteil, dass ein entsprechender Sensor, beispielsweise ein Gewichtssensor, nicht erforderlich ist.

Wie vorstehend ausgeführt, nutzen die oben beschriebenen Verfahren zum Absenken und Anheben der Sattelstütze eines oder mehrere der folgenden Signale:
- Geschwindigkeit 104 des Zweirads: dieses Signal kann beispielsweise durch einen Hall-Sensor am Rad des Zweirads erfasst werden und/oder durch GPS oder dergleichen.
- Beschleunigung 100: abhängig von der Auflösung des Signals der Geschwindigkeit 104 kann die Beschleunigung als Ableitung der Geschwindigkeit berechnet werden oder mit einem dedizierten Beschleunigungssensor gemessen werden. Da das Messen der Beschleunigung dazu dient, den Wunsch des Fahrers anzuhalten zu erkennen, kann dieses Signal anhand eines Bremsdrucksensors bereitgestellt werden, insbesondere falls der Bremsdrucksensor sowieso schon vorhanden ist, beispielsweise in Fahrrädern mit ABS. Hohe Bremsdrücke bedeuten hohe Verzögerung und somit einen starken Wunsch des Fahrers anzuhalten.
- Sattelposition: um die Position des Sattels anhand der Sattelstütze zu regeln, wird die Position der Sattelstütze erfasst. Zusätzlich wird laufend die Position der Sattelstütze gemessen, um das Absenken der Sattelstütze kontrolliert auszuführen. Die Position der Sattelstütze kann durch zumindest einen der folgenden Sensoren erfasst werden:
   ∘ Linearpotentiometer,
   ∘ Seilzugpotentiometer,
   ∘ Hall-Sensor und verschiedene im Sattel integrierte Magnete,
   ∘ Drucksensor in einer Luftkammer
- Fahrererkennung 107: diese kann beispielsweise durch einen oder mehrere der folgenden Sensoren durchgeführt werden:
   ∘ Kraftsensoren am Sattel und/oder an der Sattelstütze,
   ∘ Drucksensor in einer Hydraulikkammer

Eine Fahrererkennung kann insbesondere durch Kombination der Positionsmessung der Sattelstütze und einer ad-Hoc-Steuerung einer Höhenverstelleinrichtung bereitgestellt werden. Bevor die Höhenverstelleinrichtung betätigt wird, um das Verstellen der Sattelstütze insgesamt zu ermöglichen, kann lediglich eine kurze und kleine Verstellbarkeit der Sattelstütze ermöglicht werden, um zu erkennen, ob der Fahrer auf dem Sattel sitzt oder nicht. Wenn der entsprechende Positionssensor der Sattelstütze eine kleine Bewegung nach unten erkennt, dann sitzt der Fahrer auf den Sattel und wenn der Positionssensor eine kleine Bewegung nach oben erkennt, dann hat der Fahrer die Sattelstütze entlastet.

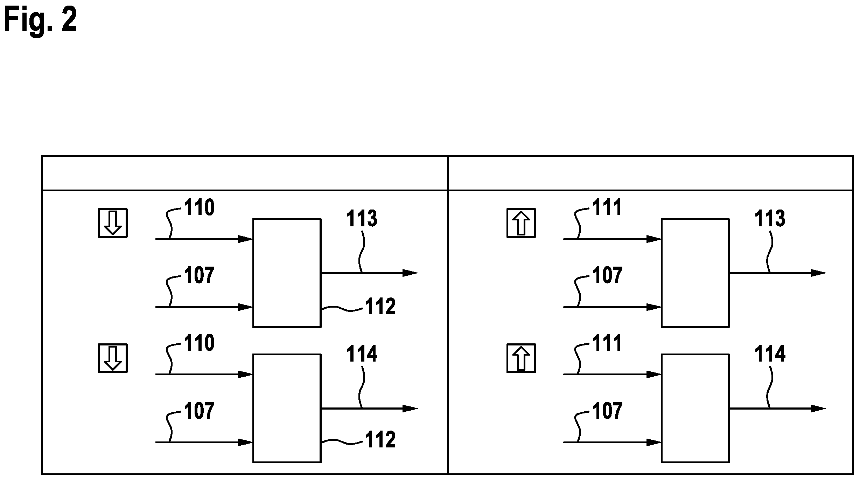

Figur 2 zeigt Schritte eines Verfahrens gemäß einer Ausführungsform der vorliegenden Erfindung.

Im Detail sind in Figur 2 Schritte zum manuellen Anheben und Absenken der Sattelstütze gezeigt.

Wenn der Fahrer einen Absenk-Taster betätigt (Bezugszeichen 110), dann wird die Höhenverstelleinrichtung für die Sattelstütze nur betätigt, wenn der Fahrer auf dem Sattel sitzt (Fahrererkennung 107) und es wird ein entsprechendes Betätigungssignal 113 ausgegeben. Falls der Fahrer nicht auf dem Sattel sitzt (Fahrererkennung 107 negativ), dann wird diese nicht betätigt (entsprechendes Signal 114), um eine Fehlanhebung des Sattels zu vermeiden.

Wenn der Fahrer einen Anhebe-Taster drückt (Bezugszeichen 111), dann wird die Höhenverstelleinrichtung nur betätigt (Betätigungssignal 113), wenn der Fahrer nicht auf dem Sattel sitzt (Fahrererkennung 107 negativ), um eine Fehlabsenkung des Sattels zu vermeiden.

Wenn der Fahrer durch die manuelle Verstellung die optimale Trittposition für den Sattel eingestellt hat, kann er die automatische Strategie beispielsweise durch einen dedizierten Taster auf einer Mensch-Maschine-Schnittstelle HMI aktivieren. Während der automatisierten Regelstrategie wird der Sattel mittels der Sattelstütze automatisch zwischen der optimalen Tritthöhe und der optimalen Anhaltehöhe geregelt.

Wird also wie vorstehend ausgeführt der Absenktaster betätigt (Bezugszeichen 110) und sitzt der Fahrer auf dem Sattel (Fahrererkennung 107 positiv) wird die Höhenverstelleinrichtung betätigt (Bezugszeichen 113). Wird der Absenktaster betätigt (Bezugszeichen 110) und sitzt der Fahrer nicht auf dem Sattel (Fahrererkennung 107 negativ) wird die Höhenverstelleinrichtung nicht betätigt (Bezugszeichen 114).

Wird der Anhebetaster betätigt (Bezugszeichen 111) und sitzt der Fahrer nicht auf dem Sattel (Fahreignung 107 negativ) wird die Höhenverstelleinrichtung betätigt (Bezugszeichen 113). Wird der Anhebetaster betätigt (Bezugszeichen 111) und sitzt der Fahrer auf dem Sattel (Fahrererkennung 107 positiv) wird die Höhenverstelleinrichtung nicht betätigt (Bezugszeichen 114).

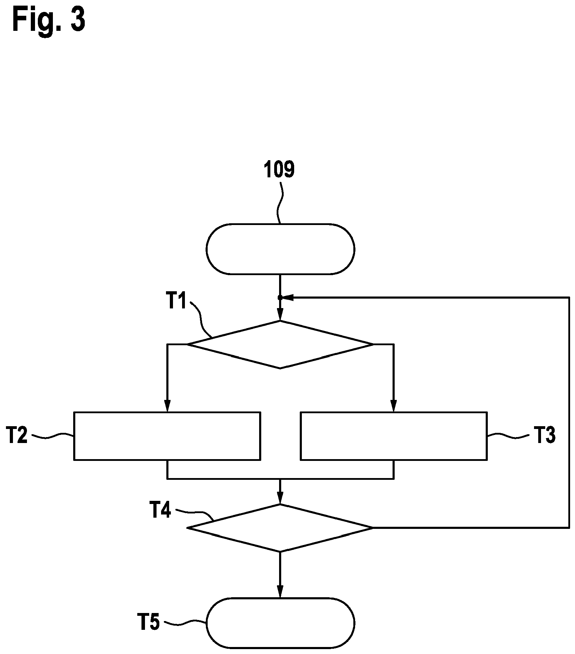

Figur 3 zeigt Schritte eines Verfahrens gemäß einer Ausführungsform der vorliegenden Erfindung.

Im Detail ist in Figur 3 ein Verfahren zur Regelung der Absenkgeschwindigkeit der Sattelstütze bei einer automatischen Absenkfunktion gezeigt. Ausgehend von einem Signal zum Absenken der Sattelstütze wird in einem ersten Schritt T1 deren Geschwindigkeit gemessen und mit einem Sollwert verglichen. Ist die gemessene Geschwindigkeit kleiner als eine vorgebbare Sollgeschwindigkeit wird die Höhenverstelleinrichtung nur teilweise betätigt, beispielsweise in dem ein Ventil lediglich teilweise geöffnet wird (Schritt T2), um die Absenkgeschwindigkeit zu erhöhen. Ist die gemessene Geschwindigkeit größer als die Sollgeschwindigkeit, wird die Höhenverstelleinrichtung weniger betätigt, beispielsweise ein Ventil wiederum teilweise geschlossen (Bezugszeichen T3), um die Absenkgeschwindigkeit zu vermindern.

Mit anderen Worten wird die Absenkgeschwindigkeit anhand eines, beispielsweise in einer Software, hinterlegten Geschwindigkeitsprofils geregelt, das heißt die Höhenverstelleinrichtung wird entsprechend betätigt, um dem Geschwindigkeitsprofil zu folgen.

Ist das Absenken abgeschlossen in einem vierten Schritt T4, hat der Sattel also seine gewünschte Absenkposition erreicht, wird das Absenken in einem fünften Schritt T5 gestoppt. Ist das Absenken noch nicht abgeschlossen, werden weiterhin die Schritte T1, T2, T3 und T4 durchgeführt. Durch die nur teilweise Betätigung der Höhenverstelleinrichtung wird die Sattelstütze und mithin der Sattel samt Fahrer langsam abgesenkt.
Bei einer manuellen Verstellung der Sattelstütze wird beispielsweise die Absenkgeschwindigkeit nicht geregelt um einem Geschwindigkeitsprofil zu folgen, sondern die Absenkgeschwindigkeit wird nur nach oben hin bei einem gewissen Schwellwert begrenzt. Der Schwellwert wird so festgelegt, dass ein Nutzer schnell genug den Sattel verstellen kann. Gleichzeitig darf die Verstellung nicht zu schnell erfolgen, damit der Nutzer eine feine Justierung der Sattelhöhe vornehmen kann.

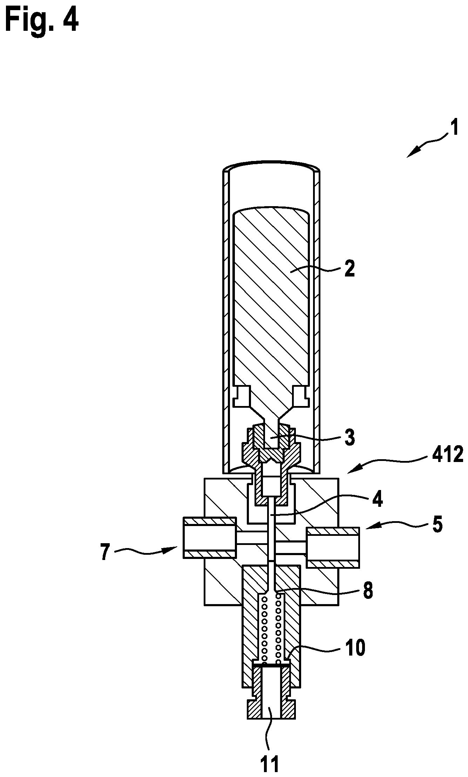

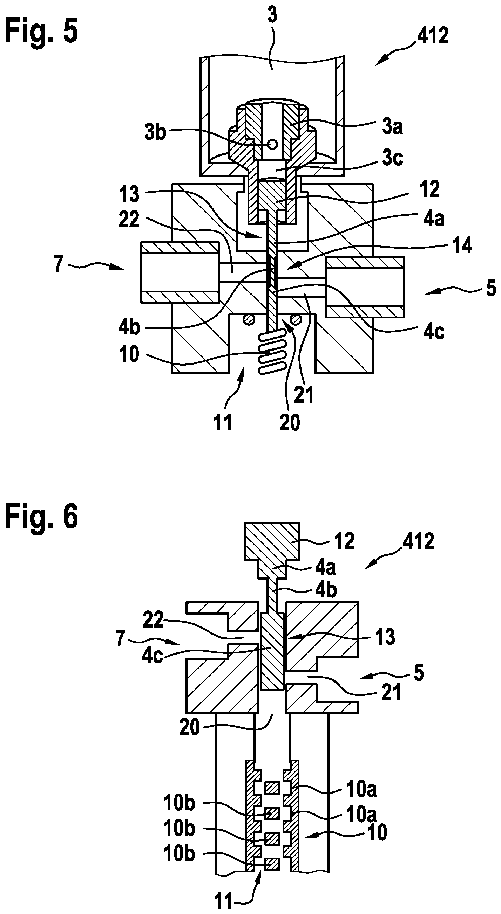

Figur 4 zeigt eine Höhenverstelleinrichtung gemäß einer Ausführungsform der vorliegenden Erfindung, Figur 5 die Höhenverstelleinrichtung der Figur 4 im Detail und die Figuren 6-8 verschiedene Zustände der Ventileinheit für verschiedene Betriebszustände der Sattelstütze.

Die Figuren 4 und 5 zeigen eine Höhenverstelleinrichtung 1, die einen Motor 2 mit einem daran angeschlossenen Getriebe 3 aufweist. Das Getriebe 3 ist mit einer Ventileinheit 412, umfassend einen Ventilkolben 12 und einer daran angeordneten Ventilnadel 4 verbunden und kann in Figur 4 und 5 auf und ab bewegt werden. Das Getriebe 3 umfasst dabei einen Getriebeflansch 3a mit einem Spannstift 3b, an dem eine Getriebebuchse 3c angeordnet ist wobei diese wiederum mit dem Ventilkolben 12 verbunden ist. Mittels der Ventilnadel 4 können Fluidverbindungen zwischen einer ersten Ausgleichskammer 7, einer zweiten Ausgleichskammer 11 und einer Hydraulikkammer 5 geöffnet beziehungsweise geschlossen werden. In Figur 5 ist im unteren Bereich eine Verbindung zu einer Ausgleichskammer 11 gezeigt, die über eine Drosseleinrichtung 10, an deren oberen Ende ein Rückschlagventil 8 angeordnet ist, mit einem Verbindungsbereich 14 über eine Öffnung 20 verbunden ist. Der Verbindungsbereich 14 ist einerseits mit einer Öffnung 21 zur Verbindung mit der Hydraulickammer 5 und andererseits mit einer gegenüberliegenden und oberhalb der Öffnung 21 angeordneten Öffnung 22 für die zweite Ausgleichskammer 7 verbunden. Der Ventilkolben 12, genauer die Ventilnadel 4 wird dabei im Bereich 13 geführt.

Die Drosseleinrichtung 10 ist im Wesentlichen in Form eines Zylinders ausgebildet und weist auf der Innenseite Erhebungen und Vertiefungen 10a auf. Zusätzlich zu den Vertiefungen 10a und auf der entsprechenden Höhe der jeweiligen Vertiefung sind Flusshemmelemente 10b angeordnet, um den Fluss des Fluids in die entsprechenden Vertiefungen der inneren Wand des Hohlzylinders zu leiten, um so eine Verzögerung des Durchflusses des Fluid zu ermöglichen.

Der Ventilkolben 12 weist an seinem unteren Ende wie vorstehend ausgeführt eine Ventilnadel 4 auf, die insgesamt in vertikaler Richtung drei unterschiedliche Bereiche 4a, 4b, 4c aufweist. Die Bereiche 4a und 4c sind so ausgebildet, dass sie den Verbindungsbereich 14 vollständig ausfüllen, das heißt, dass die Fluid-Verbindung durch die Bereiche 4a und/oder 4c unterbrochen wird. Der mittlere Bereich 4b ist so ausgebildet, dass dieser den Verbindungsbereich 14 nur teilweise ausfüllt, also nicht vollständig verschließt, somit eine teilweise Fluid-Verbindung ermöglicht.

In Figur 6 ist die Ventileinheit 412 in ihrer geschlossenen Position gezeigt, das heißt der untere Bereich 4c der Ventilnadel 4 verschließt sowohl die Öffnung 22 als auch die Öffnung 21, sodass von der Ausgleichskammer 11 über die Öffnung 20 kein Fluid in die Hydraulikkammer 5 und die Ausgleichskammer 7 eintreten kann. Mit dieser Einstellung der Ventilnadel 4 ist somit die Ventileinheit 412 geschlossen und die Sattelstütze wird in ihrer Position gehalten.

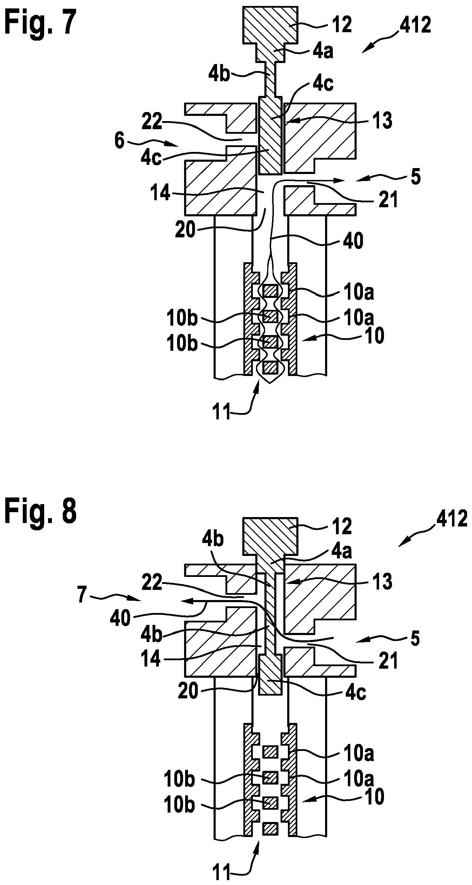

In Figur 7 ist nun die Ventilnadel 4 teilweise nach oben ausgezogen, und es wird eine Fluid-verbindung (Fluss 40 des Fluids) von der Ausgleichskammer 11 über eine Drosseleinrichtung 10, die Öffnung 20, teilweise den Verbindungsbereich 14, die Öffnung 21 bis in die Hydraulikkammer 5 ermöglicht (Fluss 40 des Fluids). Mit dieser Einstellung wird ein kontrolliertes Absenken der Sattelstütze ermöglicht.

In Figur 8 ist die Ventilnadel 4 soweit in den Verbindungsbereich 14 eingeführt, sodass der untere Bereich 4c der Ventilnadel 4 die Öffnung 20 verschließt, jedoch der Bereich 4b eine Fluidverbindung zwischen den Öffnungen 21 und 22 über den Verbindungsbereich 14 ermöglicht (Fluidrichtung Bezugszeichen 30). In dieser Stellung ist die Ventileinheit 412 geöffnet und der Sattel kann angehoben werden.

Die Komponenten der Ventileinheit 412, also Ventilkolben 12, Ventilnadel 4 oder dergleichen können insbesondere aus Edelstahl hergestellt sein.

Mit anderen Worten wird beim Absenken der Sattelstütze der Ventilkolben 12 mit Ventilnadel 4 nach oben gebracht und die Ventilnadel 4 schließt die in den Figuren 4-8 obere linke Verbindung 22 zu der Ausgleichskammer 7. Das Fluid kann durch die Drosseleinrichtung 10 von der Ausgleichskammer 11 in die Hydraulikkammer 5 fließen. Die Drosseleinrichtung 10 ermöglicht eine Verzögerung des Fluidflusses, bevor dieses die Ventilnadel 4 erreicht und somit kann die Ventileinheit 412 mit reduziertem Aufwand die Geschwindigkeit des Absenkens der Sattelstütze regeln.

Ein Rückschlagventil 8 (nicht gezeigt in den Figuren 5-8) verhindert, dass die Sattelstütze angehoben werden kann, wenn der Fahrer nicht drauf sitzt und die Ventileinheit 412 beziehungsweise die Ventilnadel 4 in der Absenkposition ist. Beim Anheben schließt die Ventilnadel 4 der Ventileinheit 412 die untere Öffnung 20 zu dem Verbindungsbereich 14 und damit zur Ausgleichskammer 11 und verbindet die oberen Öffnungen 21, 22 zum Austausch eines Fluids, beispielsweise einer Hydraulikflüssigkeit. Somit ist es möglich, die Sattelstütze anzuheben ohne Verzögerung durch die Drosseleinrichtung 10.

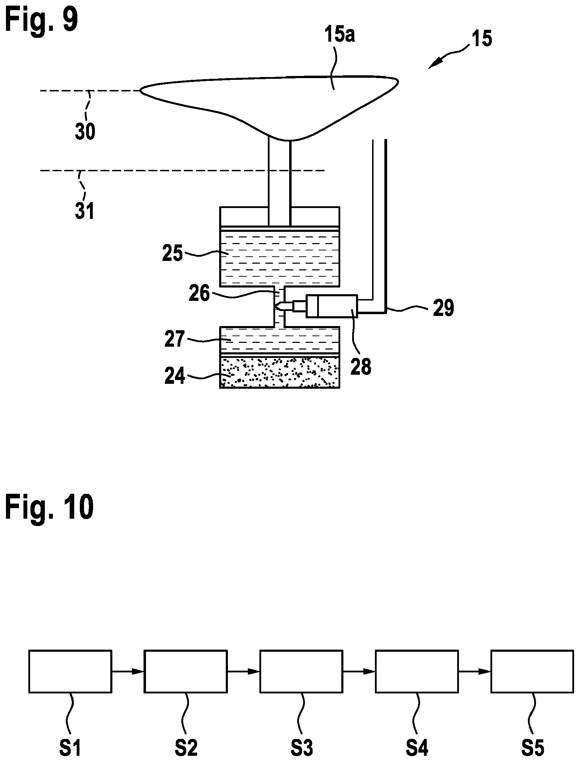

Figur 9 zeigt eine Sattelstütze mit einer Höhenverstelleinrichtung gemäß einer Ausführungsform der vorliegenden Erfindung.

In Figur 9 ist eine Sattelstütze 15 mit Sattel 15a gezeigt. Diese ist zwischen einer Trittposition 30 und einer Anhalteposition 31 in Figur 9 in vertikaler Richtung verfahrbar. Der untere Bereich der Sattelstütze 15 steht mit einer Hydraulikkammer 25 in Verbindung, die über einen Kanal 26 mit einer Ausgleichskammer 27 verbunden ist. Der Fluss der Hydraulikflüssigkeit im Kanal 26 wird durch ein Ventil 28, welches über Versorgungsleitungen 29 betätigbar ist, gesteuert. Unterhalb der Ausgleichskammer 27 ist eine Luftfedereinrichtung 24 angeordnet. Ist das Ventil 28 offen, kann der Fahrer den Sattel mit seinem Eigengewicht verstellen. Um den Sattel absenken zu können ist es erforderlich, dass der Fahrer auf den Sattel sitzt. Um den Sattel anheben zu können, muss der Fahrer den Sattel entlasten, sodass die komprimierte Luft der Luftfedereinrichtung 24 mittels der Hydraulikflüssigkeit den Sattel wieder anheben kann. Ist das Ventil 28 nicht betätigt, das heißt der Kanal 26 verschlossen, wird die Position des Sattels auf der gewünschten Höhe gehalten.

Figur 10 zeigt Schritte eines Verfahrens zum Regeln einer Höhe einer passivverstellbaren Sattelstütze eines Zweirads gemäß einer Ausdrucksform der vorliegenden Erfindung.

Hierbei erfolgt in einem ersten Schritt S1 ein Ermitteln von zumindest einem Wert zumindest einer Messgröße, die zumindest eine n-te Ableitung einer Wegfunktion des Zweirads wiedergibt, wobei n eine natürliche Zahl ist.

In einem weiteren Schritt S2 erfolgt ein Ermitteln eines Antriebsmoments des Zweirads, insbesondere eines Pedalmoments des Zweirads.

In einem weiteren Schritt S3 erfolgt ein Ermitteln einer Belastung der Sattelstütze.

In einem weiteren Schritt S4 erfolgt ein Absenken der Sattelstütze von einer vorgebbaren Tritthöhe, insbesondere auf eine vorgebbare Anhaltehöhe, wenn die Geschwindigkeit für ein Absinken von Werten der zumindest einen Messgröße und ein Absinken des Antriebsmoments detektiert wird und/oder die Belastung der Sattelstütze einen ersten vorgebbaren Wert überschreitet und/oder in einem weiteren Schritt S5 erfolgt ein Anheben der Sattelstütze von der vorgebbaren Anhaltehöhe, insbesondere auf die vorgebbare Tritthöhe, wenn ein Ansteigen von Werten der zumindest einen Messgröße und ein Ansteigen des Antriebsmoments detektiert und/oder die Belastung der Sattelstütze einen zweiten vorgebbaren Wert unterschreitet.

Zusammenfassend weist zumindest eine der Ausführungsformen der Erfindung zumindest einen der folgenden Vorteile auf:
- automatisierte Steuerung einer passiven Sattelstütze, sodass der Sattel automatisch bei Anhalte- und Losfahrvorgängen des Zweirads angehoben oder abgesenkt werden kann,
- niedrige Kosten,
- niedrige Leistungsaufnahme,
- einfache Implementierung,
- kaum zusätzliches Gewicht,
- wenig Sensoren zur Steuerung der Sattelstütze erforderlich,
- Erhöhung des Fahrkomforts für einen Fahrer des Zweirads,
- Verminderung beziehungsweise Unterdrückung von Kavitationen des Fluids beim kontrollierten Absenken,
- höhere Lebensdauer der Höhenverstelleinrichtung.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zum Regeln einer Höhe (30,31) einer unbelastet verstellbaren Sattelstütze (15) eines Zweirads, umfassend die Schritte
- Ermitteln (S1) von zumindest einem Wert zumindest einer Messgröße (100, 104), die zumindest eine n-te Ableitung einer Wegfunktion des Zweirads wiedergibt, wobei n eine natürliche Zahl ist,
- Ermitteln (S2) eines Antriebsmoments (101) des Zweirads, insbesondere eines Pedalmoments des Zweirads, und/oder Ermitteln (S3) einer Belastung (107) der Sattelstütze (15),
- Absenken (S4) der Sattelstütze (15) von einer vorgebbaren Tritthöhe (30), insbesondere auf eine vorgebbare Anhaltehöhe (31), wenn ein erster Schwellwert von Werten der zumindest einen Messgröße (100,104) überschritten wird und ein zweiter Schwellwert von Werten des Antriebsmoments (101) unterschritten wird und/oder die Belastung (107) der Sattelstütze (15) einen ersten vorgebbaren Wert überschreitet, und/oder
- Anheben (S5) der Sattelstütze (15) von der vorgebbaren Anhaltehöhe (31), insbesondere auf die vorgebbare Tritthöhe (30), wenn ein dritter Schwellwert von Werten der zumindest einen Messgröße (100, 104) überschritten wird und Werte des Antriebsmoments (101) einen vierten Schwellwert überschreiten und/oder die Belastung (107) der Sattelstütze (15) einen zweiten vorgebbaren Wert unterschreitet.

2. Verfahren gemäß Anspruch 1, wobei Werte zumindest zweier unterschiedlicher Messgrößen (100, 104) ermitteln werden, die unterschiedliche Ordnungen der Ableitung der Wegfunktion wiedergeben.

3. Verfahren gemäß Anspruch 2, wobei eine der Messgrößen (100) eine Beschleunigung und die andere Messgröße (104) eine Geschwindigkeit des Zweirads wiedergibt.

4. Verfahren gemäß einem der Ansprüche 2-3, wobei ein Schwellwert (103) für die zweite Messgröße (104) anhand zumindest eines Werts der ersten Messgröße (100) bestimmt wird.

5. Verfahren gemäß Anspruch 4, wobei der Schwellwert (103) für die zweite Messgröße (104) anhand eines Zwischenwerts (102) errechnet wird, der einem Schwellwert für die Geschwindigkeit des Verringerns von Werten der ersten Messgröße korrigiert auf Basis von Werten des Antriebsmoments (101) entspricht.

6. Verfahren gemäß einem der Ansprüche 1-5, wobei bei einem Absenken der Sattelstütze (15) die Geschwindigkeit des Absinkens der Sattelstütze (15) gemessen und auf und/oder unter einen vorgebbaren Wert geregelt wird.

7. System zum Regeln einer Höhe (30,31) einer unbelastet verstellbaren Sattelstütze (15) eines Zweirads, umfassend
einen ersten Sensor zum Ermitteln von zumindest einem Wert zumindest einer Messgröße (100, 104), die zumindest eine n-te Ableitung einer Wegfunktion des Zweirads wiedergibt, wobei n eine natürliche Zahl ist,
einen zweiten Sensor zum Ermitteln eines Antriebsmoments (101) des Zweirads, insbesondere eines Pedalmoments des Zweirads und/oder einen dritten Sensor zum Ermitteln einer Belastung (107) der Sattelstütze (15), und
eine Höhensteuerungseinrichtung, die mit den Sensoren zum Empfang von jeweiligen Messwerten der Sensoren verbunden ist und die ausgebildet ist, eine Höhenverstelleinrichtung (1) für die Sattelstütze (15) derart zu betätigen, dass ein Absenken der Sattelstütze (15) von einer vorgebbaren Tritthöhe (30), insbesondere auf eine vorgebbare Anhaltehöhe (31), vorgenommen wird, wenn ein erster Schwellwert von Werten der zumindest einen Messgröße (100,104) überschritten wird und ein zweiter Schwellwert von Werten des Antriebsmoments (101) unterschritten wird und/oder die Belastung (107) der Sattelstütze (15) einen ersten vorgebbaren Wert überschreitet,, und/oder
ein Anheben der Sattelstütze (15) von einer vorgebbaren Anhaltehöhe (31), insbesondere auf die vorgebbare Tritthöhe (30), vorgenommen wird, wenn ein dritter Schwellwert von Werten der zumindest einen Messgröße (100, 104) überschritten wird und Werte des Antriebsmoments (101) einen vierten Schwellwert überschreiten und/oder die Belastung (107) der Sattelstütze (15) einen zweiten vorgebbaren Wert unterschreitet.

8. Höhenverstelleinrichtung (1) zum unbelasteten Verstellen einer Sattelstütze (15) eines Zweirads, umfassend
eine Fluidregeleinheit (412),
zumindest eine erste Kammer (5) und
zumindest eine zweite Kammer (7), die fluidisch miteinander verbunden sind, und wobei mittels der Fluidregeleinheit (412) der Fluss eines Fluids zwischen erster (5) und zweiter Kammer (7) regelbar ist, und wobei ein Element der Sattelstütze (15) mit einer der Kammern (5, 7) verbindbar ist, sodass mittels der Sattelstütze (15) ein Druck auf das Fluid in der einen Kammer (5, 7) ausübbar ist, und wobei
eine Drosseleinrichtung (10) angeordnet ist, die bei geöffneter Fluidregeleinheit (412) den Fluss (40) des Fluids verlangsamt.

9. Höhenverstelleinrichtung gemäß Anspruch 8, wobei die Drosseleinrichtung (10) in Form eines Hohlzylinders zum Durchfluss des Fluids ausgebildet ist, wobei der Innendurchmesser des Hohlzylinders über seine Längserstreckung variierend (10a), insbesondere regelmäßig, ausgebildet ist und insbesondere wobei mittig ein oder mehrere Flusshemmelemente (10b) angeordnet sind.

10. Höhenverstelleinrichtung gemäß einem der Ansprüche 8-9, wobei die Drosseleinrichtung (10) in Richtung des Flusses (40) des Fluids beim Absenken der Sattelstütze (15) vor der Fluidregeleinheit (412) angeordnet ist.

11. Höhenverstelleinrichtung gemäß Anspruch 10, wobei die Drosseleinrichtung (10) an ihrem Ausgang in Flussrichtung des Fluids beim Absenken der Sattelstütze (15) ein Rückschlagventil (8) aufweist.

12. Höhenverstelleinrichtung gemäß einem der Ansprüche 8-11, wobei die Drosseleinrichtung (10), Fluidregeleinheit (412) und die beiden Kammern (5, 7) so zueinander angeordnet sind, dass die Drosseleinrichtung (10) bei geschlossener Fluidregeleinheit (412) beim Anheben der Sattelstütze (15) fluiddurchflussfrei ist.
